# EUROPÄISCHE PATENTSCHRIFT

(11) **EP 1 942 725 B1**
(45) Veröffentlichungstag und Bekanntmachung des Hinweises auf die Patenterteilung: **29.07.2009**
(21) Anmeldenummer: 06805483.2
(22) Anmeldetag: 25.10.2006
(51) Int. Cl.: A01K 97/18

(54) **VORRICHTUNG ZUR EXTRAKTION EINES ANGELHAKENS**
APPARATUS FOR EXTRACTING A FISHING HOOK
DISPOSITIF D'EXTRACTION D'UN HAMECON

(30) Priorität: 02.11.2005 DE 102005052622
(43) Veröffentlichungstag der Anmeldung: 16.07.2008
(73) Patentinhaber: Larcher, Antonio, 80796 München (DE)
(72) Erfinder: Larcher, Antonio, 80796 München (DE)
(74) Vertreter: Schwan - Schwan - Schorer
(86) Internationale Anmeldenummer: PCT/DE2006/001886
(87) Internationale Veröffentlichungsnummer: WO 2007/051442

(56) Entgegenhaltungen:
- JP-A- 9 000 134
- JP-A- 2001 169 706
- US-A- 3 011 286
- US-A- 3 869 822
- US-B1- 6 240 673

## Beschreibung

Die Erfindung bezieht sich auf eine Vorrichtung zur Extraktion eines Angelhakens aus dem Maul eines Fisches gemäß dem Oberbegriff von Anspruch 1.

Üblicherweise werden zur Extraktion eines Angelhakens aus dem Maul eines Fisches Zangen mit möglichst langen Greifbacken verwendet, wobei eine Rachensperre verwendet werden kann, die das Maul des Fisches offenhalten soll, um die Sicht auf den Haken für die Extraktion zu ermöglichen. Dabei ist sowohl das Ergreifen des Hakens mit der Zange als auch das manuelle des Herausziehens des Hakens aus dem Maul des Fisches schwierig, was auch sowohl zu Verletzungen des Fisches (dies ist bei beabsichtigter Wiederfreilassung ("Catch and Release") problematisch) als auch zu Beschädigungen des Hakens führen kann. Ferner muss während der Extraktion die Zange in der einen Hand gehalten werden, während der Fisch mit der anderen Hand festgehalten werden muss.

Aus der GB 1 366 861 ist ein pistolenförmiges Werkzeug bekannt, welches durch Betätigung eines in die Offenstellung vorgespannten Abzugs geschlossen werden kann, um den Haken im Maul des Fisches zu ergreifen. Die Klauenvorrichtung umfaßt dabei eine an dem vorderen Ende des Pistolenlaufs ausgebildete feststehende Klaue und eine mittels des Abzugs relativ dazu schwenkbare bewegliche Klaue.

Aus der US 6,240,673 B1 ist eine Vorrichtung bekannt, welche einen als Abzug ausgebildeten Handgriff aufweist, der gelenkig mit jeweils einem Ende von zwei Stangen verbunden ist, deren anderes Ende jeweils gelenkig mit einem rohrförmigen Hakenhalter verbunden ist, der über seine gesamte Länge mit einem Schlitz zum Einführen der Angelleine versehen ist. Zum Vorbereiten der Extraktion wird zunächst die Angelleine in den Hakenhalter eingeführt und die gesamte Vorrichtung mit parallel zueinander liegenden Stangen soweit ins Maul des Fisches geschoben, bis der Schenkel des Angelhakens in dem Hakenhalter zu liegen kommt. Anschließend wird der Handgriff zu einer Schwenkbewegung betätigt, wodurch der Hakenhalter über die beiden Stangen zu einer Schwenkbewegung dergestalt veranlaßt wird, dass der Haken selbsttätig aus dem Maul des Fisches herausgedreht wird. Nachteilig bei dieser Vorrichtung ist, dass sie einerseits relativ anfällig für Beschädigungen ist und andererseits keine einfache Betätigung, insbesondere keine Einhandbetätigung, möglich ist.

Aus der JP 09-000134 ist eine Vorrichtung gemäß dem Oberbegriff von Anspruch 1 bekannt, wobei der Haltearm an seinem hinteren Ende mit einem Handgriff nach der Art eines Schraubendrehers versehen ist und wobei die Schwenkeinrichtung von einer an dem Hakenhalter angreifenden Pleuelstange gebildet wird, die mittels eines entlang des Haltearms verschiebbaren Abzugs, der mittels einer Feder vorgespannt ist, betätigbar ist, um den Hakenhalter zwischen der Eingriffsstellung und der Freigabestellung zu verschwenken. Nachteilig ist dabei, dass einerseits die Handhabung der Vorrichtung nicht ganz einfach ist und insbesondere eine Einhandbedienung ausschließt und andererseits die Pleuelstange relativ leicht beschädigt werden kann.

Es ist Aufgabe der vorliegenden Erfindung, eine Vorrichtung zur Extraktion eines Angelhakens aus dem Maul eines Fisches zu schaffen, mit welcher der Angelhaken selbsttätig und sicher erfaßt und gelöst wird und die Gefahr des Wiedereinhakens beim Herausziehen aus dem Maul des Fisches vermieden wird und welche besonders robust und zuverlässig ausgebildet ist.

Diese Aufgabe wird durch eine Vorrichtung gemäß Anspruch 1 gelöst.

Diese Lösung erlaubt einerseits eine sichere, schonende, einfache und schnelle Entfernung des Angelhakens, weil der Hakenhalter zunächst längs der gespannten Angelleine geradewegs zum Angelhaken geleitet wird und anschließend der Angelhaken durch Betätigung der Schwenkeinrichtung selbsttätig in der richtigen Richtung verschwenkt wird. Da die Krümmung des Hakens danach zum Rachenausgang hin gerichtet ist, kann beim Herausziehen des Hakens aus dem Rachen kein Wiedereinhaken des Hakens erfolgen. Andererseits wird dadurch, dass das Pleuel zum Betätigen des Hakenhalters im Inneren des hohl ausgebildeten Haltearms angeordnet ist, für einen guten Schutz des Pleuels und damit für ein robustes und zuverlässiges Gerät gesorgt.

Der Hakenhalter kann austauschbar ausgebildet sein. In diesem Fall wird nur ein einheitliches Grundgerät benötigt, welches in großer Stückzahl und damit kostengünstig hergestellt werden kann, während unterschiedlich dimensionierte Hakenhalter mit dem Grundgerät verwendet werden können, was der Tatsache, dass üblicheweise für jede Fischart besondere Angelhaken und Hakengrößen benutzt werden, Rechnung trägt.

Vorzugsweise ist am hinteren Ende des Haltearms ein Handgriff derart angeordnet, dass der Handgriff und der Haltearm pistolenförmig zueinander angeordnet sind. Diese pistolenförmige Ausbildung des Handgriffs erlaubt eine Einhandbedienung der Vorrichtung, wodurch beispielsweise mit der anderen Hand die Angelleine gehalten werden kann.

In weiterer vorteilhafter Ausgestaltung ist im Bereich des hinteren Endes des Haltearms eine Klemmeinrichtung für die Angelleine vorgesehen. Dadurch kann die Angelleine vor der Betätigung der Schwenkeinrichtung für den Hakenhalter bezüglich der Extraktionsvorrichtung fixiert werden, wonach die Angelleine nicht mehr mit der anderen Hand gehalten werden muss, um die Extraktion des Angelhakens zu bewerkstelligen.

Weitere bevorzugte Ausgestaltungen der Erfindung ergeben sich aus den Unteransprüchen.

Im folgenden wird eine Ausführungsform der Erfindung anhand der beigefügten Zeichnungen beispielhaft erläutert. Dabei zeigen:
- Fig. 1: eine Seitenansicht einer Ausführungsform einer erfindungsgemäßen Angelhaken-Extraktionsvorrichtung, wobei sich der Hakenhalter in der Eingriffsstellung befindet;
- Fig. 2: eine Ansicht wie Fig. 1, wobei sich der Hakenhalter in der Freigabestellung befindet;
- Fig. 3: eine Aufsicht auf das Pleuel der Vorrichtung von Fig. 1;
- Fig. 4: eine Ansicht von unten des Haltearms der Vorrichtung von Fig. 1;
- Fign. 5a und 5b: eine Aufsicht bzw. Ansicht von hinten des Federbügels der Vorrichtung von Fig. 1;
- Fign. 6a bis 6c: eine Ansicht des Kopfteils der Vorrichtung von Fig. 1 von der Seite, von oben bzw. von vom;
- Fign. 7a und 7b: eine Ansicht des Hakenhalters von Fig. 1 von der Seite bzw. von vom;
- Fign. 8a und 8b: eine Ansicht des Handgriffs der Vorrichtung von Fig. 1 von der Seite bzw. von vorn;
- Fig. 9: eine Seitenansicht des Schiebeglieds der Vorrichtung von Fig. 1; und
- Fig. 10: eine Explosionsdarstellung der Klemmeinrichtung der Vorrichtung von Fig. 1.

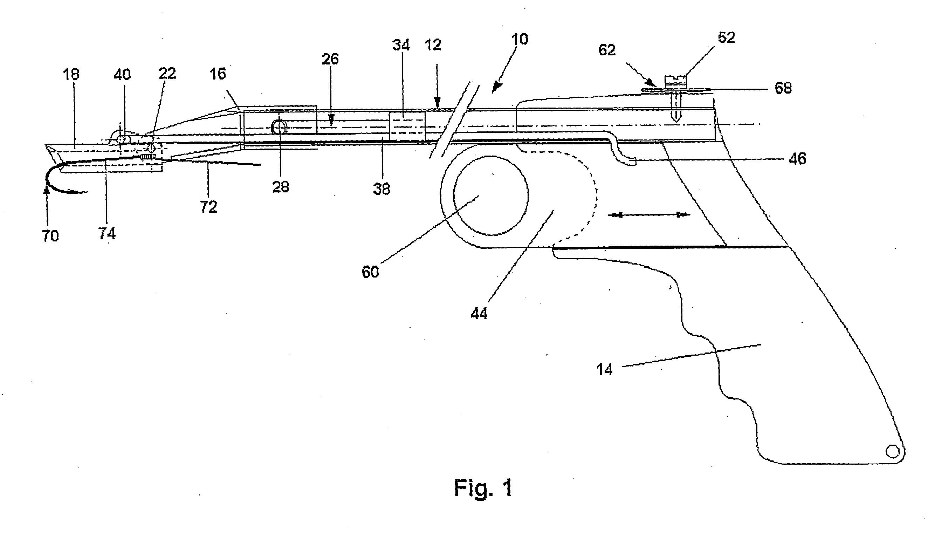

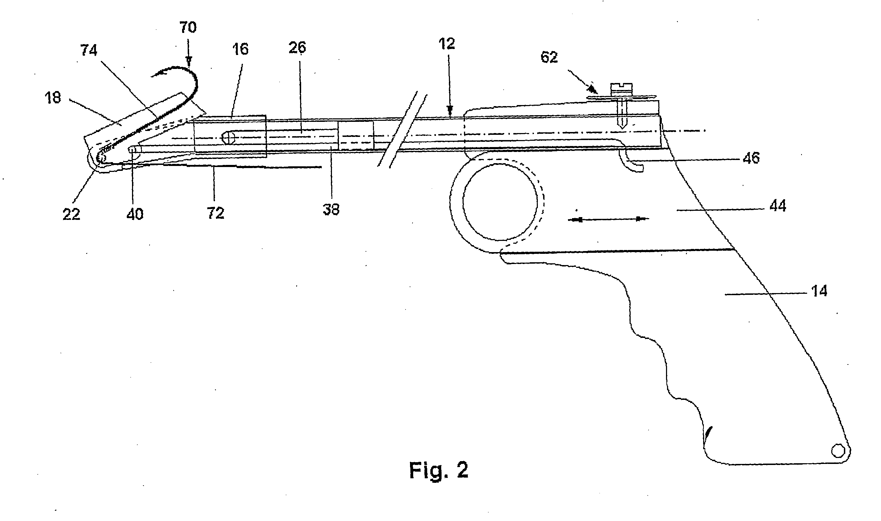

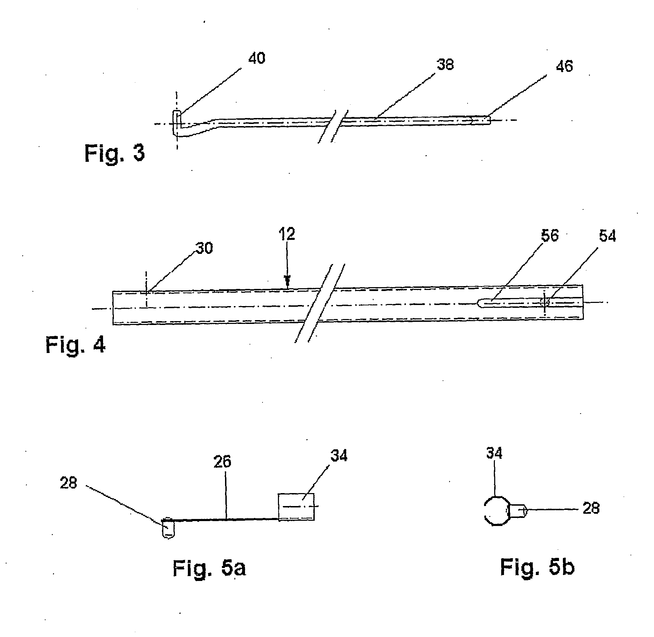

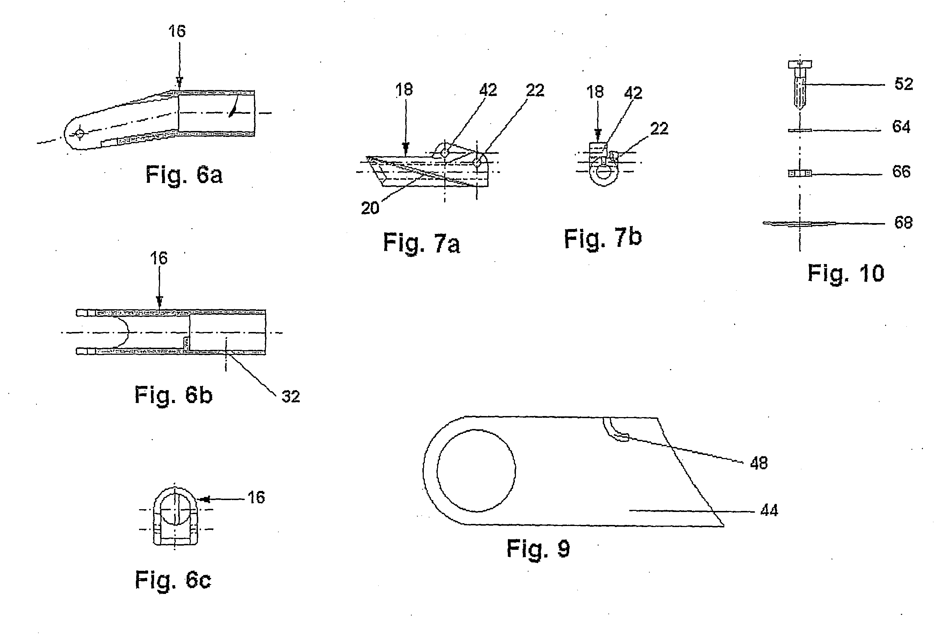

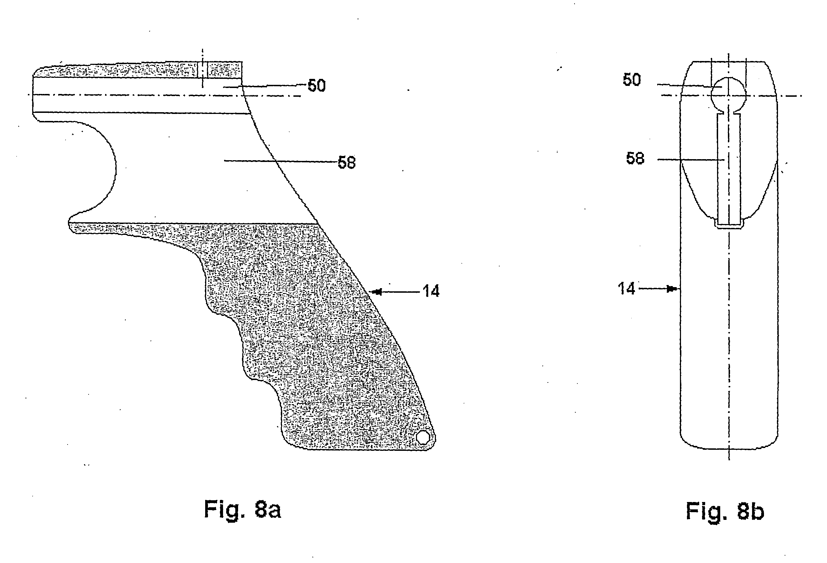

In den Fig. 1 und 2 ist eine Ausführungsform eines Angelhakenextraktors 10 in ihrer Gesamtheit in zwei unterschiedlichen Funktionsstellungen gezeigt, wobei einzelne Komponenten in den Figuren 3 bis 10 separat dargestellt sind, zum Teil in unterschiedlichen Ansichten.

Der Angelhakenextraktor 10 weist einen langgestreckten, hohlen rohrförmigen Haltearm 12 auf, dessen hinteres Ende mit einem Handgriff 14 dergestalt verbunden ist, dass der Haltearm und der Handgriff 14 eine pistolenartige Konfiguration bilden, während am vorderen Ende des Haltearms 12 ein Kopfteil 16 aufgesteckt ist, welches an seinem vorderen Ende schwenkbar mit einem Hakenhalter 18 verbunden ist.

Der Hakenhalter 18 ist rohrförmig ausgebildet und über seine gesamte Länge mit einem schraubenförmig angeordneten Schlitz 20 zum Einführen einer Angelleine 72 versehen (von der Angelleine 72 ist in Fign. 1 und 2 nur das am Angelhaken 70 angreifende Ende dargestellt). An seinem hinteren Ende ist der Hakenhalter 18 mittels eines Gelenkbolzens 22 schwenkbar mit dem Kopfteil 16 verbunden. Das Kopfteil 16 ist dergestalt abgewinkelt ausgebildet, dass der Hakenhalter 18, und insbesondere dessen Schwenkpunkt 22, bezüglich der Mitte des Haltearms 12 radial nach unten versetzt ist.

Das vordere Ende des Hakenhalters 18 ist trichterförmig ausgebildet (z.B. durch Ansenken), um den Eintritt des Angelhakenschenkels 74 zu erleichtern. Ferner ist das trichterförmige vordere Ende des Hakenhalters 18 dergestalt abgeschrägt (in der Darstellung von Fig. 1 nach unten), dass der Angelhakenschenkel 74 so zu liegen kommt (in der Darstellung von Fig. 1 mit unten liegender Spitze), dass die Spitze des Angelhakens 70 mit beginnender Schwenkbewegung des Hakenhalters 18 ausgehend von der in Fig. 1 gezeigten Eingriffsstellung aus dem Gewebe im Maul des Fisches, in welchem er sich verhakt hat, herausgezogen wird. Dies wird gemäß Fig. 1 dadurch erzielt, dass das kürzere Ende des abgeschrägten trichterförmigen vorderen Endes des Hakenhalters 18 auf der Seite des Hakenhalters 18 liegt (in der Darstellung von Fig. 1 auf der unteren Seite), welche bei beginnender Schwenkbewegung des Hakenhalters 18 ausgehend von der in Fig. 1 gezeigten Eingriffsstellung gegenüber zu der Seite liegt, zu welcher hin der Hakenhalter 18 verschwenkt wird (in der Darstellung von Fig. 1 wird der Hakenhalter 18 zur oberen Seite hin verschwenkt).

Der Schlitz 20 zum Einführen der Angelleine 72 beginnt zweckmäßigerweise am längeren Ende (in der Darstellung von Fig. 1 oben) des abgeschrägten trichterförmigen vorderen Endes des Hakenhalters 18, damit ein Wiederausfädeln möglichst vermieden wird (der Angelhakenschenkel 74 mit der Angelleine 72 kommt gemäß Fig. 1 am kürzeren Ende des abgeschrägten trichterförmigen vorderen Endes des Hakenhalters 18 (d.h. unten) zu liegen.

Im Inneren des Haltearms 12 ist ein Federbügel 26 angeordnet, der an seinem vorderen Ende eine Rastnase 28 aufweist, welche durch eine Öffnung 30 in der Wand des Haltearms 12 in einer Öffnung 32 in der Wand des Kopfteils 16 verrastet, wenn das Kopfteil 16 auf das vordere Ende des Haltearms 12 aufgesteckt wird. An seinem anderen Ende ist der Federbügel 26 als Hülse 34 ausgebildet, die sich mit ihrer Außenseite an die Innenseite der Wand des Haltearms 12 anlegt und durch eine entsprechende radial nach außen weisende Vorspannung dort an Ort und Stelle gehalten wird. Um ein Einführen der Hülse 34 in den Haltearm 12 zu ermöglichen, ist diese mit einem seitlichen Schlitz 36 versehen. Durch Betätigung der Rastnase 28 des Federbügels 26 kann das Kopfteil 16 zusammen mit dem Hakenhalter 18 leicht ausgetauscht werden.

Im Inneren des Haltearms 12 ist ferner ein Pleuel 38 vorgesehen, welches mit seinem vorderen Ende 40, welches abgewinkelt ausgebildet ist, an dem Hakenhalter 18 angreift, indem es in eine Öffnung 42 an dem Hakenhalter 18 eingreift, welche an der Oberseite des Hakenhalters 18 vorgesehen ist. Das Pleuel 38 ist mittels Betätigung eines als Abzug ausgebildeten Schiebeglieds 44 im Inneren des Haltearms 12 in Längsrichtung verschiebbar, wobei die beiden Gelenkpunkte 22 und 42 des Hakenhalters 18 so angeordnet sind, dass die Verschiebebewegung des Pleuels 38 in Längsrichtung ein Verschwenken des Hakenhalters 18 um den Gelenkbolzen 22 bewirkt. Das Pleuel 38 ist an seinem hinteren Ende 46 abgewinkelt ausgebildet, wobei das hintere Ende 46 in eine entsprechend Aufnahme 48 in dem Schiebeglied 44 eingreift.

Der Handgriff 14 ist mit einer Bohrung 50 versehen, in welche das hintere Ende des Haltearms 12 eingesteckt wird und mittels einer Schraube 52, welche in eine Öffnung 54 des Haltearms 12 eingreift, gehalten wird. An seiner Unterseite ist der Haltearm 12 mit einem Schlitz 56 versehen, durch welchen hindurch das abgewinkelte hintere Ende 46 des Pleuels 38 in die Aufnahme 48 des Schiebeglieds 44 eingreift.

Das Schiebeglied 44 ist in einer Ausnehmung 58 des Handgriffs 14 in Längsrichtung verschiebbar geführt, wobei an seinem vorderen Ende ein Fingerloch 60 ausgebildet ist.

Die Schraube 52 dient nicht nur zum Fixieren des Haltearms 12 bezüglich des Handgriffs 14, sondern sie bildet auch einen Teil einer Klemmeinrichtung 62 für die Angelleine, welche eine erste, plane Metallscheibe 64, eine Gummischeibe 66 sowie eine zweite, konvexe Metallscheibe 68 aufweist. Die Angelleine wird dabei zwischen der Unterseite der Metallscheibe 68 und der Oberseite des Handgriffs 14 eingeklemmt.

Der Angelhakenextraktor 10 kann durch den beschriebenen Aufbau mit wenigen Handgriffen in einfacher Weise, beispielsweise zu Reinigungszwecken, zerlegt werden, wobei das Kopfteil 16 von dem Haltearm 12 gelöst werden kann, das Pleuel 38 von dem Hakenhalter 18 und dem Schiebeglied 44 gelöst werden kann, der Haltearm 12 durch Lösen der Schraube 52 von dem Handgriff 14 gelöst werden kann und das Schiebeglied 44 nach dem Lösen des Pleuels 38 von dem Handgriff 14 gelöst werden kann.

Vorzugsweise ist die Vorrichtung aus solchen Materialien ausgebildet, dass sie in Wasser schwimmt.

### Die Funktionsweise des Angelhakenextraktors 10 ist wie folgt:

Ausgehend von der in Fig. 1 gezeigten Eingriffsstellung, in welcher der Hakenhalter im wesentlichen parallel zu dem Haltearm 12 ausgerichtet ist, indem das Schiebeglied 44 bis zum vorderen Anschlag nach vom geschoben ist, wird die Angelleine 72 durch den Schlitz 20 hindurch in das Innere des Hakenhaltes 18 gebracht, wobei sie durch die spiralförmige Ausbildung des Schlitzes 20 daran gehindert wird, den Hakenhalter 18 wieder zu verlassen.

Der Angelhakenextraktor 10 wird dann vorsichtig entlang der Angelleine in Richtung des Angelhakens vorgeschoben, bis der Angelhakenschenkel 74 in dem Hakenhalter 18 aufgenommen wird, wobei die Angelleine 72 als Führung wirkt. Danach wird die gespannte Angelleine 72 mit einer halben Wicklung in der Klemmeinrichtung 62 eingeklemmt. Von nun an ist der Angelhakenextraktor 10 einhändig bedienbar, was bei stark zappelnden Fischen oder stark schwankenden Booten besonders vorteilhaft ist.

Wenn nun am Fingerabzug 60 des Schiebeglieds 44 nach hinten gezogen wird, schwenkt der Hakenhalter 18 durch die Verschiebebewegung des Pleuels 38 um den Drehpunkt 22 mit seinem vorderen Ende in die in Fig. 2 gezeigte Freigabestellung nach oben, was einer Drehung um etwa 150° entspricht. Durch diese Drehbewegung wird der Haken 70 selbsttätig aus dem Fischmaul freigesetzt. Da in dieser Position die Krümmung des Hakens 70 nach außen weist, kann er nun problemlos mitsamt dem Angelhakenextraktor 10 aus dem Fischmaul nach außen gezogen werden, ohne dass sich der Haken 70 wieder im Fischmaul einhaken kann.

## Patentansprüche

1. Vorrichtung zur Extraktion eines Angelhakens (70) aus dem Maul eines Fisches, wobei der Angelhaken an einer Angelleine (72) befestigt ist, mit einem langgestreckten Haltearm (12) und einen mit dessen vorderem Ende verbundenen, rohrförmigen Hakenhalter (18), der mittels einer Schwenkeinrichtung (38, 44) aus einer nach vorn gerichteten Eingriffsstellung für den Angelhaken in eine nach hinten gerichtete Freigabestellung schwenkbar ist, wobei der freie Innenquerschnitt und die Länge des Hakenhalters so bemessen sind, dass der Schenkel (74) des Angelhakens hineinpasst, und wobei der Hakenhalter auf seiner gesamten Länge mit einem Schlitz (20) zum Einführen der Angelleine ausgebildet ist, wobei die Schwenkeinrichtung ein an dem Hakenhalter angreifendes Pleuel (38) aufweist, welches entlang des Haltearms in Längsrichtung verschiebbar ist, **dadurch gekennzeichnet, dass** der Haltearm (12) hohl ausgebildet ist und das Pleuel (38) im Inneren des Haltearms angeordnet ist.

2. Vorrichtung nach Anspruch 1, **dadurch gekennzeichnet, dass** der Hakenhalter (18) austauschbar ist.

3. Vorrichtung nach Anspruch 2, **dadurch gekennzeichnet, dass** das Pleuel (38) in lösbarem Eingriff mit dem Hakenhalter (18) steht.

4. Vorrichtung nach Anspruch 3, **dadurch gekennzeichnet, dass** das vordere Ende (40) des Pleuels (38) abgewinkelt ist und in eine in Querrichtung verlaufende Öffnung (42) an dem Hakenhalter (18) eingreift.

5. Vorrichtung nach einem der Ansprüche 2 bis 4, **dadurch gekennzeichnet, dass** der Hakenhalter (18) mittels eines am vorderen Ende des Haltearms (12) anbringbaren Kopfteils (16) mit dem Haltearm verbunden ist, wobei der Hakenhalter bezüglich des Kopfteils schwenkbar ist.

6. Vorrichtung nach Anspruch 5, **dadurch gekennzeichnet, dass** das Kopfteil (16) auf das vordere Ende des Haltearms (12) aufsteckbar und mittels eines Rastmechanismus (26) sicherbar ist.

7. Vorrichtung nach Anspruch 6, **dadurch gekennzeichnet, dass** der Rastmechanismus einen Inneren des Haltearms (12) angeordneten Federbügel (26) aufweist.

8. Vorrichtung nach Anspruch 7, **dadurch gekennzeichnet, dass** der Federbügel (26) an seinem freien Ende eine Rastnase (28) aufweist, welche durch eine Öffnung (30) in der Wand des Haltearms (12) in einer Öffnung (32) des Kopfteils (16) verrastet.

9. Vorrichtung nach Anspruch 7 oder 8, **dadurch gekennzeichnet, dass** der Federbügel (26) an seinem anderen Ende als Hülse (34) ausgebildet ist, die sich mit ihrer Außenseite an die Innenseite der Wand des Haltearms (12) anlegt.

10. Vorrichtung nach einem der Ansprüche 5 bis 9, **dadurch gekennzeichnet, dass** das Kopfteil (16) abgewinkelt ausgebildet ist, um den Hakenhalter (18) bezüglich des Haltearms (12) in radialer Richtung zu versetzen.

11. Vorrichtung nach einem der Ansprüche 5 bis 10, **dadurch gekennzeichnet, dass** der Hakenhalter (18) mittels eines an dem hinteren Ende des Hakenhalters angeordneten Gelenkbolzens (42) mit dem Kopfteil (16) verbunden ist.

12. Vorrichtung nach einem der vorhergehenden Ansprüche, **dadurch gekennzeichnet, dass** die Schwenkeinrichtung (38, 44) ein Schiebeglied (44) aufweist, welches zu einer Verschiebung in Längsrichtung des Haltearms (12) betätigbar ist, um das Pleuel (38) zu seiner Verschiebebewegung anzutreiben.

13. Vorrichtung nach Anspruch 12, **dadurch gekennzeichnet, dass** das Pleuel (38) in lösbarem Eingriff mit dem Schiebeglied (44) steht.

14. Vorrichtung nach Anspruch 13, **dadurch gekennzeichnet, dass** das hintere Ende (46) des Pleuels (38) abgewinkelt ist und in eine Aufnahme (48) in dem Schiebeglied (44) einsteckbar ist.

15. Vorrichtung nach einem der Ansprüche 12 bis 14, **dadurch gekennzeichnet, dass** am hinteren Ende des Haltearms (12) ein Handgriff (14) derart angeordnet ist, dass der Handgriff und der Haltearm pistolenförmig zueinander angeordnet sind.

## Claims

1. A device for the extraction of a fish hook (70) fixed to a fishing line (72) from a mouth of a fish, comprising an extended retaining arm (12) and a tubular hook holder (18) connected to the front end of the retaining arm, wherein the hook holder may be pivoted from a forward facing engaged position for the fish hook into a rearward facing release position by means of a pivot device (38, 44), wherein the free inner cross-section and the length of the hook holder are such that a fish hook shaft (74) fits in, wherein the hook holder is embodied over the entire length thereof with a slot (20) for introduction of the fishing line, wherein the pivot device comprises a connecting rod (38) which acts on the hook holder and which is movable along the retaining arm in a longitudinal direction, **characterized in that** the retaining arm (12) is hollow and the connecting rod (38) is located in the interior of the retaining arm.

2. The device of claim 1, **characterized in that** the hook holder (18) is exchangeable.

3. The device of claim 2, **characterized in that** the connecting rod (38) engages with the hook holder (18) in a detachable manner.

4. The device of claim 3, **characterized in that** the front end (40) of the connecting rod (38) is angled and engages with an opening (42) at the hook holder (18) extending in a transverse direction.

5. The device of one of claims 2 to 4, **characterized in that** the hook holder (18) is connected to the retaining arm (12) via a head portion (16) which is for being fixed to the front end of the retaining arm, with the hook holder being pivotable with regard to the head portion.

6. The device of claim 5, **characterized in that** the head portion (16) is for being inserted at the front end of the retaining arm (12) and is for being secured by means of a snap-in mechanism (26).

7. The device of claim 6, **characterized in that** the snap-in mechanism comprises a spring band (26) located in the interior of the retaining arm (12).

8. The device of claim 7, **characterized in that** a free end of the spring band (26) comprises a projection (28) which snaps, via an opening (30) in the wall of the retaining arm (12), into an opening (32) of the head portion (16).

9. The device of one of claims 7 and 8, **characterized in that** the other end of the spring band (26) is designed as a sleeve (34) having an outer side abutting onto the inner side of the wall of the retaining arm (12).

10. The device of one of claims 5 to 9, **characterized in that** the head portion (16) is angled for providing for a radial offset of the hook holder (18) relative to the retaining arm (12).

11. The device of one of claims 5 to 10, **characterized in that** the hook holder (18) is connected to the head portion (16) via a hinge bolt (42) located at the rear end of the hook holder.

12. The device of one of the preceding claims, **characterized in that** the pivot device (38, 44) comprises a slider member (44) which is operable for movement in the longitudinal direction of the retaining arm (12) in order to drive the connecting rod (38).

13. The device of claim 12, **characterized in that** the connecting rod (38) engages with the slider member (44) in a detachable manner.

14. The device of claim 13, **characterized in that** the rear end (46) of the connecting rod (38) is angled and is for being inserted into a receptacle (48) in the slider member (44).

15. The device of one of claims 12 to 14, **characterized in that** a handle (14) is located at the rear end of the retaining arm (12) in such a manner that the handle and the retaining arm are located in a pistol-like manner relative to each other.

## Revendications

1. Appareil d'extraction d'un hameçon (70) de la bouche d'un poisson, dans lequel l'hameçon est fixé à une ligne à pêche (72), avec un bras de support (12) allongé et un fixage de l'hameçon tubulaire (18) raccordé avec son bout avant, qui est pivotant par une installation de pivotage (38, 44) d'une position de verrouillage pour l'hameçon dans une position de déverrouillage dirigée vers l'arrière, dans lequel appareil la libre section intérieure et la longueur du fixage de l'hameçon sont dimensionnées tel que la branche (74) de l'hameçon y peut être insérée et le fixage de l'hameçon est conçu sur sa entière longueur avec une fissure (20) pour introduire la ligne à pêche, dans lequel appareil l'installation de pivotage comporte une bielle (38) agissante au fixage de l'hameçon, ladite bielle est déplaceable le long du bras de support dans la direction longitudinale, **caractérisé en ce que** le bras de support (12) est conçu de manière creusée et la bielle (38) est située dans l'intérieur du bras de support.

2. Appareil selon la revendication 1, dans lequel le fixage de l'hameçon (18) est rechangeable.

3. Appareil selon la revendication 2, dans lequel la bielle (38) est en verrouillage détachable du fixage de l'hameçon (18).

4. Appareil selon la revendication 3, dans lequel le bout avant (40) de la bielle (38) est coudé et est verrouillé au fixage de l'hameçon (18) dans une orifice (42) s'étendant en sens transversal.

5. Appareil selon l'une des revendications 2 à 4, dans lequel le fixage de l'hameçon (18) est relié avec le bras de support par un en-tête (16) attachable au bout avant du bras de support (12), le fixage de l'hameçon étant pivotant par rapport à l'en-tête.

6. Appareil selon la revendication 5, dans lequel l'en-tête (16) est attachable sur le bout avant du bras de support (12) et est arrêtable par un mécanisme encliquetable.

7. Appareil selon la revendication 6, dans lequel le mécanisme encliquetable comporte un étrier de ressort (26) situé dans l'intérieur du bras de support (12).

8. Appareil selon la revendication 7, dans lequel l'étrier de ressort (26) comporte à son bout libre un tenon d'arrêt (28), lequel enclique par un orifice (30) dans le paroi du bras de support (12) dans un orifice (32) de l'en-tête (16).

9. Appareil selon la revendication 7 ou 8, dans lequel l'étrier de ressort (26) est conçu comme douille (34) à l'autre bout, ladite douille s'attache avec son côté extérieur au côté intérieur du bras de support (12).

10. Appareil selon l'une des revendications 5 à 9, dans lequel l'en-tête (16) est coudé pour déplacer le fixage de l'hameçon (18) relative au bras de support (12) au sens radial.

11. Appareil selon l'une des revendications 5 à 10, dans lequel le fixage de l'hameçon (18) est relié avec l'en-tête (16) par un gaujon d'articulation (42) situé au bout derrière du fixage de l'hameçon.

12. Appareil selon l'une des revendications précédentes, dans lequel l'installation de pivotage (38, 44) comporte un coulisseau (44), lequel est actionnable à initier un déplacement du bras de support (12) en sens longitudinal pour actionner la bielle (38) à son movement de déplacement.

13. Appareil selon la revendication 12, dans lequel la bielle (38) est en verrouillage détachable avec le coulisseau (44).

14. Appareil selon la revendication 13, dans lequel le bout arrière (46) de la bielle (38) est coudé et insérable dans un élément de logement (48) dans le coulisseau (44).

15. Appareil selon l'une des revendications 12 à 14, dans lequel une manette (14) est conçue au bout derrière du bras de support (12) en manière que la manette et le bras de support sont placés l'un vers l'autre comme un pistolet.
